# EUROPÄISCHE PATENTANMELDUNG

(11) **EP 3 677 420 A1**
(43) Veröffentlichungstag der Anmeldung: **08.07.2020**
(21) Anmeldenummer: 19219832.3
(22) Anmeldetag: 27.12.2019
(51) Int. Cl.: B32B 3/26, B32B 5/02, B32B 5/18, B32B 5/24, B32B 15/08, B32B 15/14, B32B 27/30, B60R 13/08, F02B 77/11, F16L 59/02, G10K 11/168

(54) **MOTORRAUMDÄMMELEMENT**

(30) Priorität: 04.01.2019 AT 500022019
(71) Anmelder: Greiner Perfoam GmbH, 4550 Kremsmünster (AT)
(72) Erfinder: DRAXLER, Markus, 4040 Linz (AT); HOLZWEBER, Jürgen, 4020 Linz (AT); HUMER, Sebastian, 4085 Wesenufer (AT); KOLLER, Günther, 4846 Roitham (AT); MAIER, Alexander, 4020 Linz (AT); SCHMEISSL, Pascal, 4432 Ernsthofen (AT)
(74) Vertreter: Burger, Hannes

(57) **Zusammenfassung**

Die Erfindung betrifft ein Motorraumdämmelement (1) aus einem mehrschichtigen Verbundwerkstoff umfassend zumindest eine Metallschicht (3) oder metallisierte Schicht und zumindest eine Faserschicht (4) aus Fasern (6) und einem Bindemittel (5) für die Fasern (6) sowie gegebenenfalls zumindest eine Schaumstoffschicht (2), die auf der Faserschicht angeordnet ist, wobei das Bindemittel (5) ein Wasserglas oder ein polycarbonsäurebasierter Duroplast ist.

## Beschreibung

Die Erfindung betrifft ein Motorraumdämmelement aus einem mehrschichtigen Verbundwerkstoff umfassend zumindest eine Metallschicht oder metallisierte Schicht und zumindest eine Faserschicht aus Fasern und einem Bindemittel für die Fasern sowie gegebenenfalls zumindest eine Schaumstoffschicht, die auf der Faserschicht angeordnet ist, oder umfassend zumindest eine Faserschicht aus Fasern und einem Bindemittel für die Fasern sowie zumindest eine Schaumstoffschicht, die auf der Faserschicht angeordnet ist.

Weiter betrifft die Erfindung ein Verfahren zur Herstellung eines Motorraumdämmelementes, nach dem ein mehrschichtiger Verbundwerkstoff umfassend zumindest eine Metallschicht oder metallisierte Schicht und zumindest eine Faserschicht aus Fasern und einem Bindemittel für die Fasern, sowie gegebenenfalls zumindest eine Schaumstoffschicht, die auf der Faserschicht angeordnet wird, oder umfassend zumindest eine Faserschicht aus Fasern und einem Bindemittel für die Fasern, sowie zumindest eine Schaumstoffschicht, die auf der Faserschicht angeordnet wird, hergestellt wird.

Zur akustischen und thermischen Isolierung des Motorraums ist es aus dem Stand der Technik bekannt, sogenannte Hitzeschilder einzubauen. Vorwiegend werden dazu Formteile aus Verbundwerkstoffen eingesetzt, die neben einer Schaumkomponente auch mit einem Bindemittel gebundene Fasern aufweisen. Hitzequellenseitig ist häufig auch noch eine Metallschicht angeordnet, damit ein Teil der Hitze aus dem Motor reflektiert wird. Es ist dabei auch bekannt, diese Reflexionsschichten zu perforieren, um den Schallwellen den Durchtritt durch diese Reflexionsschicht zu ermöglichen. Ein derartiger Aufbau ist beispielsweise aus der DE 197 20 537 A1 bekannt.

Auch aus der DE 101 43 167 A1 ist eine wärme- und schalldämmende Verkleidung für den Motorraum von Kraftfahrzeugen, bestehend aus einem motorseitigen mikrogelochten Hitzereflektor, einer damit in Kontakt befindlichen Polyurethan- Schaumstoffschicht, die auf der Motorseite mit einer bei 200°C drei Wochen dauertemperaturbelastbarem duroplastischem Material getränkt ist und einer damit in Kontakt befindlichen, der Motorseite abgewandten Deckschicht.

Der vorliegenden Erfindung liegt die Aufgabe zugrunde, die Umweltverträglichkeit derartiger Motorraumdämmelemente zu verbessern.

Die Aufgabe der Erfindung wird bei dem eingangs genannten Motorraumdämmelement dadurch gelöst, dass das Bindemittel ein Wasserglas oder ein polycarbonsäurebasierter Duroplast ist.

Weiter wird mit dem eingangs genannten Verfahren gelöst, nach dem vorgesehen ist, dass als Bindemittel für die Fasern der Faserschicht ein Wasserglas oder ein polycarbonsäurebasierter Duroplast eingesetzt wird.

Von Vorteil ist dabei, dass das Bindemittel frei von Formaldehyd oder Phenol ist. Darüber hinaus handelt es sich bei diesen Bindemitteln um sogenannte wasserbasierte Bindemittel, d.h. dass keine organischen Lösungsmittel enthalten sind. In Summe wird also durch den Einsatz von Wasserglas oder einem polycarbonsäurebasierten Duroplast als Bindemittel die Umweltverträglichkeit der Motorraumdämmung verbessert. Aufgrund der verbesserten Umweltverträglichkeit des Motorraumdämmelementes kann dieses auch problemloser entsorgt bzw. wiederverwertet werden. Darüber hinaus kann insbesondere durch die Verwendung von Wasserglas als Bindemittel die Temperaturbelastbarkeit des Motorraumdämmelementes deutlich erhöht werden. Zudem ist Wasserglas nicht brennbar und es entstehen bei der Zersetzung auch keine brennbaren/entzündungsfähigen Gase.

Nach einer Ausführungsvariante der Erfindung kann das Duroplast polyacrylsäurebasierend sein. Von Vorteil ist dabei, dass damit ein Bindemittel eingesetzt werden kann, das bis zur Aushärtung einfach verarbeitet werden kann und die duroplastischen Eigenschaften erst mit dem Aushärten erhält. Es kann damit also die Verarbeitung bzw. Bearbeitung der Halbfertigfabrikate für die Motorraumdämmelemente vereinfacht werden. Insbesondere ist dabei auch von Vorteil, dass damit ein Bindemittel eingesetzt werden kann, dass thermisch härtend ist, sodass also die Härtung während der Formgebung des Motorraumdämmelementes eingeleitet werden kann bzw. stattfindet, sodass keine zusätzlichen Härtungsschritte erforderlich sind. Durch die thermische Härtbarkeit kann zudem noch eine Nachhärtung im Motorraum stattfinden.

Zur Erhöhung der Temperaturbelastbarkeit des Wärmedämmelementes werden als Fasern nach einer Ausführungsvariante der Erfindung vorzugsweise anorganische und/oder organische Fasern eingesetzt. Insbesondere werden dabei solche Fasern eingesetzt, die inert sind, also nicht mit anderen Stoffen bei den üblichen Verwendungstemperaturen reagieren, und die selbstverständlich auch nicht kanzerogen sind, um die Umweltverträglichkeit des Motorraumdämmelementes weiter zu verbessern.

Für eine einfachere Herstellbarkeit des Motorraumdämmelementes kann vorgesehen sein, die Metallschicht oder metallisierte Schicht Poren aufweist bzw. dass eine Poren aufweisende Metallschicht bzw. metallisierter Schicht eingesetzt wird. Es kann damit das bei der Härtung des Bindemittels entweichende Wasser besser aus dem Motorraumdämmelement abgeführt werden, wodurch Haftungsfehler im Verbundwerkstoff besser vermieden werden können. Aus dem gleichen Grund kann nach einer Ausführungsvariante des Verfahrens vorgesehen werden, dass eine Durchbrüche aufweisende Form für das Thermoformverfahren verwendet wird.

Zur weiteren Verbesserung dieses Effektes kann nach weiteren Ausführungsvarianten der Erfindung vorgesehen sein, dass:
- die Poren einen maximalen Durchmesser aufweisen, der ausgewählt ist aus einem Bereich von 100 µm bis 2000 µm, und/oder
- die Poren in einem Raster angeordnet sind, und/oder
- dass pro cm² Fläche zwischen 1 und 100 Poren angeordnet sind.

Eine Verbesserung der Langzeitstabilität des Motorraumdämmelementes kann zusätzlich zur Umweltverträglichkeit erreicht werden, wenn nach einer anderen Ausführungsvariante der Erfindung das Wasserglas ein Kaliwasserglas ist.

Wie bereits voranstehend angedeutet, wird das Motorraumdämmelement gemäß einer bevorzugten Ausführungsvariante des Verfahrens nach einem Thermoformverfahren umgeformt, da damit nicht nur eine rasche und einfache Formgebung erfolge kann, sondern auch damit gleichzeitig auch die Härtung des Bindemittels zumindest eingeleitet werden kann.

Es kann nach einer Ausführungsvariante des Verfahrens dazu zuerst die Metallschicht oder metallisierte Schicht und die Faserschicht umgeformt werden und danach die Schaumstoffschicht hergestellt werden. Mit anderen Worten kann damit die Schaumstoffschicht durch Hinterschäumen hergestellt werden, wodurch die Konturausfüllung des Motorraumdämmelementes mit dem Schaumstoff verbessert bzw. vereinfacht werden kann. Zudem kann damit auch die Verbundfestigkeit des Verbundwerkstoffes beeinflusst werden, insbesondere die Haftung der Schaumstoffschicht an den weiteren Schichten des Verbundwerkstoffes verbessert werden.

Zum besseren Verständnis der Erfindung wird diese anhand der nachfolgenden Figuren näher erläutert.

Es zeigen jeweils in vereinfachter, schematischer Darstellung:
- Fig. 1: einen Ausschnitt aus einem Motorraumdämmelement in Seitenansicht geschnitten;
- Fig. 2: einen Ausschnitt aus einem Motorraumdämmelement in Draufsicht;
- Fig. 3: eine Ausführungsvariante einer Form zur Herstellung eines Motorraumdämmelementes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

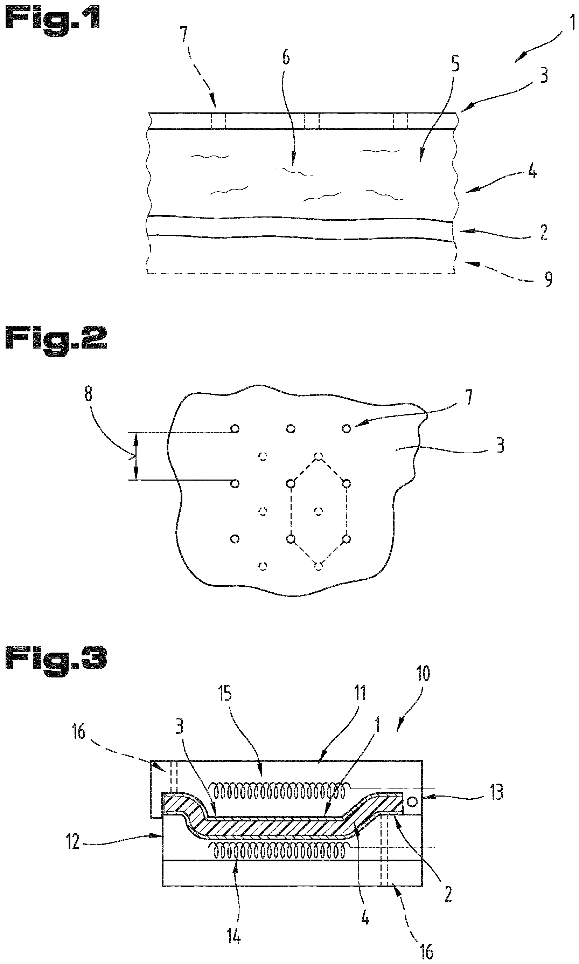

In Fig. 1 ist ein Ausschnitt aus einem Motorraumdämmelement 1.

Das Motorraumdämmelement 1 wird zur thermischen Dämmung und/oder Schalldämmung von Wärme bzw. Hitze generierenden Motorteilen eines Kfz verwendet. Dies sind insbesondere der Motorblock, das Abgassystem, etc.. Aufgrund des nachstehend konstruktiven Aufbaus des Motorraumdämmelementes 1 kann dieses sehr nahe an der Wärmequelle, wie z.B. dem Motorblock, angeordnet werden, insbesondere unmittelbar an diesen Wärmequellen anliegend angeordnet werden.

Das Motorraumdämmelement 1 besteht aus einem mehrschichtigen Verbundwerkstoff bzw. umfasst diesen. Der Verbundwerkstoff besteht in einer einfachen Ausführung aus zumindest einer Schaumstoffschicht 2, zumindest einer Metallschicht 3 oder metallisierten Schicht, und einer zwischen der Schaumstoffschicht 2 und der Metallschicht 3 oder metallisierten Schicht angeordnete Faserschicht 4. Der Verbundwerkstoff kann aber auch zumindest einer Schaumstoffschicht 2 und zumindest eine daran angeordnete Faserschicht 4 aufweisen bzw. daraus bestehen. Weiter kann der Verbundwerkstoff aus zumindest einer Metallschicht 3 oder metallisierten Schicht und zumindest einer daran angeordneten Faserschicht 4 bestehen bzw. diese aufweisen.

Die Schaumstoffschicht 2 ist insbesondere aus einem Polyurethanschaumstoff hergestellt bzw. besteht aus diesem. Beispielsweise kann die Schaumstoffschicht 2 ein sogenannter Leichtschaumstoff sein. Als Rohstoff für den (Leicht)Schaumstoff der Schaumstoffschicht 2 kann beispielsweise ein ein- oder mehrkomponentiges Polyurethan, beispielsweise durch Zusammenfügen einer Polyisocyanatkomponente mit einer Polyolkomponente, wie dies aus dem Stand der Technik bereits bekannt ist, oder ein Polyolefin, wie z.B. Polypropylen, Polyethylen etc., verwendet werden.

Die Schaumstoffschicht 2 weist vorzugsweise ein Raumgewicht ausgewählt aus einem Bereich mit einer unteren Grenze von 5 kg/m³ und einer oberen Grenze von 200 kg/m³, insbesondere ausgewählt aus einem Bereich mit einer unteren Grenze von 15 kg/m³ und einer oberen Grenze von 90 kg/m³, auf. Die Schaumstoffschicht 2 kann bei dem Motorraumdämmelement 1 auch als Absorberschicht (in Bezug auf ihre akustischen Eigenschaften) bezeichnet werden.

Die Schaumstoffschicht 2 kann beispielsweise eine Schichtdicke zwischen 1 mm und 20 mm aufweisen. Die Schichtdicke der Schaumstoffschicht 2 kann aber auch größer als 20 mm sein, beispielsweise bis zu 200 mm betragen.

Der Einsatz der Schaumstoffschicht 2 ist die bevorzugte Ausführungsvariante. Anstelle der oder zusätzlich zur Schaumstoffschicht 2 kann auch eine Harzschicht oder eine Wabenplatte eingesetzt werden.

Die Metallschicht 3, die auch als Reflexionsschicht bezeichnet werden kann und deshalb die Schicht des Motorraumdämmelementes 1 im eingebauten Zustand ist, die der Wärme- bzw.

Hitzequelle zugewandt/am nächstliegenden ist, besteht insbesondere aus Aluminium. Sie kann aber auch aus einem anderen Metall bzw. metallischen Werkstoff bestehen, beispielsweise aus Titan, Gold, Silber, Edelstahl etc.

Die Metallschicht 3 dient vor allem dem Hitzeschutz der weiteren Schichten des Verbundwerkstoffes des Motorraumdämmelementes 1.

Anstelle der Metallschicht kann auch eine metallisierte Schicht eingesetzt werden. Diese umfasst eine Trägerschicht, auf die eine Metallschicht aufgebracht ist, beispielsweise aufgedampft ist, bzw. besteht aus diesen Komponenten.

Als Metall für die metallisierte Schicht können die voranstehend zur Metallschicht 3 genannten Metalle oder metallischen Werkstoffe verwendet werden.

Prinzipiell können alle reflektierenden Werkstoffe eingesetzt werden, also beispielsweise auch solche, die nur im Infrarot-Bereich reflektierend wirken.

Die Trägerschicht der metallisierten Schicht kann eine Polymerschicht sein. Die Polymerschicht ist z.B. eine Polyethylen-, eine Polypropylen-, eine Polyamid-, eine Polytetrafluorethylenschicht, etc. Eine Trägerschicht aus Kunststoff ist kann beispielsweise verwendet werden, wenn die an der Trägerschicht anliegenden Temperaturen kleiner 250°C sind.

Die Metallschicht kann eine Schichtdicke zwischen 10 µm und 500 µm, bevorzugt zwischen 50 µm und 100 µm, aufweisen. Die metallisierte Schicht kann eine Schichtdicke zwischen 1 mm und 10 mm aufweisen, wobei die Metallabscheidung eine Schichtdicke zwischen 1 µm und 10 µm aufweisen kann.

Die Faserschicht 4 umfasst ein Bindemittel 5 und Fasern 6 bzw. besteht aus diesen beiden Komponenten. Sie kann auch weitere Werkstoffe, wie beispielsweis Glaskügelchen, enthalten.

Die Fasern 6 Die Fasern können ausgewählt sein aus einer Gruppe umfassend Glasfasern, Mineralfasern, wie z.B. Basaltfasern, Keramikfasern, Carbonfasern, Metallfasern, Naturfasern (insbesondere für Anwendungen bei einer Temperatur von kleiner 250 °C), wie z.B. Hanffasern, Flachsfasern, Wollfasern, Baumwollfasern oder Holzfasern, generell organische Fasern, wie beispielsweise Kunststofffasern, etc. Gemäß einer Ausführungsvariante des Motorraumdämmelementes 1 sind die Fasern 6 jedoch anorganische Fasern 6, insbesondere aus den genannten Gruppen von anorganischen Fasern 6, vorzugsweise Glasfasern. Die Fasern, insbesondere Glasfasern, können einen Filamentdurchmesser zwischen 2 µm und 30 µm, insbesondere zwischen 10 µm und 25 µm, aufweisen.

Es können auch Mischungen aus unterschiedlichen Fasern 6 eingesetzt werden.

Die Fasern können zu besseren Verbindung mit dem Bindemittel mit einem Haftvermittler, beispielsweise einem Primer, beschichtet oder imprägniert sein.

Die Fasern 6 können vollkommen lose in der Faserschicht 4 vorliegen. Es aber auch möglich, dass die Fasern 6 in Form eines Vlieses angeordnet sind, das heißt als textiles Flächengebilde aus lose zusammenliegenden Fasern 6, welche noch nicht miteinander verbunden sind. Selbstverständlich können die Fasern 6 auch zu Garnen verarbeitet und diese zu Matten gewoben, gewirkt oder gestrickt werden. Ebenso können auch Matten aus den Fasern 6 eingesetzt werden, die ein- oder beidseitig vernadelt sind. Vorzugsweise wird ein Nadelvlies verwendet.

Das (Glasfaser-Nadelvlies) kann ein Flächengewicht zwischen von 200 g/cm² bis 3000 g/cm², insbesondere zwischen von 500 g/cm² bis 2000 g/cm², aufweisen.

Die Fasern 6 können als Monofilamente, als gesponnene Stapelfasern, etc. vorliegen. Die (anorganischen) Fasern 6 sind bevorzugt zumindest teilweise aus Langglasfasern mit einer Länge von zumindest 20 mm gebildet. Dadurch kann die Handhabbarkeit der Fasern 6 bei der Verarbeitung zum Motorraumdämmelement 1 und die mechanische Festigkeit des Motorraumdämmelements 1 verbessert werden. Bei Bedarf können aber auch Kurzfasern mit einer Länge von 0,2 mm bis 0,4 mm oder ein Gemisch aus Lang- und Kurzfasern eingesetzt werden.

Die Fasern 6 liegen in dem Bindemittel 5 eingebettet und/oder mit dem Bindemittel 5 miteinander verbunden vor. Als Bindemittel 6 wird ein Wasserglas oder ein polycarbonsäurebasierter Duroplast (d.h. einer Vorstufe eines Duroplasts, die durch das Aushärten zum Duroplast wird) eingesetzt.

Das Wasserglas kann ein Natrium- oder Kaliumwasserglas sein, wobei nach einer bevorzugten Ausführungsvariante des Motorraumdämmelementes 1 ein Kaliwasserglas eingesetzt wird.

Das eingesetzte Wasserglas kann beispielsweise eine wässrige Lösung mit einem Feststoffgehalte zwischen 25 % und 50 %, insbesondere zwischen 35 % und 50 % sein. Weiter kann es eine Dichte bei 20 °C zwischen 1,4 g/cm³ und 1,6 g/cm³ aufweisen. Weiter kann es eine Viskosität bei 20 °C zwischen 20 mPa s und 100 mPa s aufweisen. Beispielsweise kann Geosil 14423 von der Wöllner GmbH eingesetzt werden.

Gegebenenfalls kann dem Wasserglas ein Härter zugesetzt werden, beispielsweise ein Härter auf Basis eines Aluminiumsilikats. Die Aushärtung kann bei Verwendung eines Härters beispielsweise bei einer Temperatur zwischen 80 °C und 200 °C innerhalb einer Zeit von 5 Minuten bis 30 Minuten erfolgen. Beispielsweise kann Betol H31 oder Betolin HT von der Wöllner GmbH eingesetzt werden.

Prinzipiell kann jede geeignete Poylcarbonsäure als Basis für das Bindemittel eingesetzt werden. Gemäß einer bevorzugten Ausführungsvariante ist das Duroplast jedoch polyacrylsäurebasierend, insbesondere ein Ester der Polyacrylsäure.

Die eingesetzte Poylacrylsäure kann beispielsweise eine wässrige Lösung mit einem Feststoffgehalte zwischen 35 % und 60 % sein. Weiter kann es eine Viskosität bei 20 °C zwischen 100 mPa s und 3000 mPa s aufweisen. Beispielsweise kann als Poylacrylsäure Acrodur DS 3530 oder Acrodur 950 L von BASF eingesetzt werden

Die Aushärtung kann bei Verwendung eines Härters beispielsweise bei einer Temperatur zwischen 150 °C und 210 °C innerhalb einer Zeit von 5 Minuten bis 30 Minuten erfolgen.

Ebenso wie das Wasserglas wird auch das polycarbonsäurebasierter Duroplast bevorzugt in flüssiger Form eingesetzt.

Das Bindemittel 5 kann auf die Fasern 6 aufgesprüht, aufgestrichen, aufgetaucht, etc., werden.

Wie im nachfolgenden noch ausgeführt, wird das Bindemittel 5 thermisch gehärtet.

In der Fig. 2 ist eine weitere und gegebenenfalls für sich eigenständige Ausführungsform des Motorraumdämmelementes 1 gezeigt, wobei wiederum für gleiche Teile gleiche Bezugszeichen bzw. Bauteilbezeichnungen wie in den vorangegangenen Fig. 1 verwendet werden. Um unnötige Wiederholungen zu vermeiden, wird auf die detaillierte Beschreibung zu der vorangegangenen Fig. 1 hingewiesen bzw. Bezug genommen.

Wie aus Fig. 2 zu ersehen ist, kann nach einer Ausführungsvariante des Motorraumdämmelementes 1 vorgesehen sein, dass die Metallschicht 3 oder metallisierte Schicht Poren 7 (in Fig. 1 strichliert dargestellt) aufweist. Die Poren 7 erstrecken sich durch die gesamte Schichtdicke der Metallschicht 3 bzw. metallisierten Schicht und reichen somit bis zur Faserschicht 4.

Es sei an dieser Stelle darauf hingewiesen, dass auch eine Ausführungsvariante kann auch ohne Poren möglich ist, insbesondere wenn das Motorraumdämmelement 1 nicht "hinterschäumt" wird.

Prinzipiell sind perforierte Metallschichten in derartigen Formteilen bekannt, wie dies voranstehend ausgeführt wurde. Diese Poren im Stand der Technik dienen der Schalleinleitung in das Formteil. Zum Unterschied dazu dienen die Poren 7 in der Metallschicht 3 bei der Erfindung primär der Entwässerung des Motorraumdämmelementes 1 während dessen Herstellung, d.h. während der Härtung des Bindemittels 5.

Die Poren 7, bzw. die Löcher, in der Metallschicht 3 bzw. metallisierten Schicht können einen maximalen Durchmesser aufweisen, der ausgewählt ist aus einem Bereich von 0,1 mm bis 2 mm, insbesondere von 0,1 mm bis 1 mm, vorzugsweise von 0,2 mm bis 0,5 mm. Diese Abmessung bezieht sich bei kreisrunden Poren 7 (in Draufsicht betrachtet) auf den Durchmesser. Es ist aber auch möglich, dass die Poren 7 eine von der Kreisgeometrie abweichende Geometrie aufweisen, insbesondere viereckig (quadratisch, rechteckig, rautenförmig) oder dreieckig oder sechseckig sind (jeweils in Draufsicht betrachtet). In diesem Fall bezieht sich diese Abmessung auf den Durchmesser des Hüllkreises, der die jeweilige geometrische Form der Poren 7 gerade einschließt.

Es besteht weiter die Möglichkeit, dass nicht alle Poren 7 den gleichen Durchmesser aufweisen, sondern dass über in der Metallschicht 3 bzw. metallisierten Schicht Poren 7 mit unterschiedlichen Durchmessern angeordnet sind. Mit dieser Ausführungsvariante kann die Breitbandigkeit der Schallabsorption verbessert werden.

Die Poren 7 in der Metallschicht 3 bzw. metallisierten Schicht können eine Fläche in Draufsicht auf das Motorraumdämmelement 1 einnehmen, die zwischen 15 % und 40 %, insbesondere zwischen 15 % und 30 %, der Gesamtfläche entspricht, die von der Metallschicht 3 bzw. metallisierten Schicht eingenommen wird, wiederum in Draufsicht betrachtet.

Die Poren 7 können völlig unregelmäßig angeordnet vorliegen. Bevorzugt ist jedoch nach einer Ausführungsvariante des Motordämmelementes 1 vorgesehen, dass die Poren 7 in einem Raster (Lochmuster) angeordnet sind, wie dies in Fig. 2 gezeigt ist. Der Raster kann beispielsweise aus einer Wiederholung von Quadraten (wie in Fig. 2 gezeigt) oder Rechtecken oder Rauten oder Dreiecken oder Sechsecken (in Fig. 2 strichliert dargestellt) ausgebildet sein.

Nach einer Ausführungsvariante dazu kann vorgesehen sein, dass die Poren 7 in einem Abstand 8 zueinander angeordnet sind, wobei ein Abstand 8 zwischen zwei unmittelbar benachbarten Poren 7 so ausgewählt sein kann, dass pro cm² Fläche zwischen 1 und 100, insbesondere zwischen 1 und 20, beispielsweise 5, Poren 7 angeordnet sind.

Der Abstand 8 wird dabei vom Ende der einen Pore 7 bis zum Anfang der nächsten Pore 7 gemessen, wie dies in Fig. 2 dargestellt ist.

Das Motorraumdämmelement 1 kann neben den genannten Schichten auch noch weitere Schichten aufweisen. Beispielsweise kann auf der Schaumstoffschicht 2 und mit dieser verbunden eine Dekorschicht 9 angeordnet sein, wie dies in Fig. 1 strichliert angedeutet ist. Die Dekorschicht 9 kann beispielsweise durch einen Teppich, einen Filz, ein Vlies, ein Textilmaterial, wie z.B. ein Gewebe oder ein Gewirke, eine, insbesondere geprägte, Kunststofffolie, gebildet sein. Ebenso kann das Motorraumdämmelement 1 (z.B. kann auf der Schaumstoffschicht 2) eine anpassungsfähige und temperaturstabile weitere Schicht aufweisen, die eine sehr hohe Wärmeleitfähigkeit aufweist. Diese weitere Schicht kann eine wärmeleitfähige Grafitschicht bzw. -folie, ein wärmeleitfähiges Metall, wie z.B. Al, Cu, etc., eine metallisierte Schicht auf einem Träger, insbesondere auch Graphen, sein.

Wie bereist voranstehen erwähnt, erfolgt die Herstellung des Motorraumdämmelementes 1 bevorzugt in einer Formpresse 10 nach einem sogenannten heißen Prozess. Dazu werden in einen Formhohlraum der Formpresse 10 zumindest die Metallschicht 3 (oder die metallisierte Schicht) und die Faserschicht 4 eingelegt.

Nach einer Ausführungsvariante des Verfahrens kann/können auch die Schaumstoffschicht 2 in die Formpresse 10 und/oder die Dekorschicht 9 in die Formpresse 10 eingelegt werden.

Das Einlegen der einzelnen Schichten in die Formpresse 10 erfolgt dabei in der richtigen Reihenfolge, sodass der gewünschte Schichtaufbau des Verbundwerkstoffes erhalten wird, insbesondere jener, der in Fig. 1 dargestellt ist.

Es kann aber auch eine vorgeformte Metallfolie, beispielsweise Aluminiumfolie, verwendet werden, insbesondere dann, wenn die Folienstärke größer 100 µm wird bzw. ein hoher Umformgrad den Einsatz von einem vorgeformten Material vorteilhaft macht.

Nach dem Einlegen der Schichten werden diese miteinander zu einem Sandwichbauteil und Anwendung von erhöhter Temperatur und Druck miteinander verbunden und in gewünschte Form gebracht. Dabei erfolgt gleichzeitig die Initierung der Aushärtung bzw. die Aushärtung des voranstehend genannten Bindemittels 5. Die Temperatur kann dabei ausgewählt werden aus einem Bereich von 100 °C bis 250 °C. Der Druck kann zwischen 100 t/m² und 300 t/m²betragen. Gegebenenfalls kann diese Schichtanordnung während der Formgebung auch teilweise umgeformt werden, beispielsweise in diskreten Bereichen stärker verpresst werden als in anderen Bereichen, um damit das Motorraumdämmelement 1 mit unterschiedlichen Schichtdicken auszubilden. Beispielsweise kann ein Randbereich des Motorraumdämmelementes 1 über dessen gesamten Umfang stärker verpresst werden.

Die Poren 7 in der Metallschicht 3 (oder der metallisierten Schicht) werden bevorzugt vor der Verbundbildung in der Formpresse hergestellt, beispielsweise durch Stanzen, mit Nadelwalzen, etc.. Es ist aber auch möglich, dass diese Poren 7 in der Formpresse 10 mit einem geeigneten Werkzeug hergestellt werden.

In Fig. 3 ist eine Ausführungsvariante der Formpresse 10 (Formwerkzeug) in geschlossener bzw. offener Stellung dargestellt. In der einfachsten Ausführung weist dieses nur ein Oberwerkzeug 11 bzw. einen Stempel, und nur ein Unterwerkzeug 12 bzw. ein Gesenk auf, die eine obere Anlagefläche und eine untere Anlagefläche für das Motorraumdämmelement 1 bilden. Zwischen dem Oberwerkzeug 11 und dem Unterwerkzeug 12 wird in der geschlossenen Stellung der Formpresse 10 ein Formhohlraum zur Ausbildung des Motorraumdämmelementes 1 gebildet.

Die Schichten des Motoraumdämmelementes 1 bzw. das daraus gebildete Halbfertigfabrikat wird vorzugsweise derart in die Formpresse 10 eingelegt, dass die Metallschicht 3 oder metallisierte Schicht möglichst weit oben angeordnet ist, insbesondere die oberste Schicht in der Formpresse 10 bildet, damit entstehender Wasserdampf besser entweichen kann.

Nach und/oder durch Schließung des Formpresse 10 erfolgt die Formgebung des Motorraumdämmelementes 1. Die Schließung kann dabei über das Verschwenken des Oberwerkzeuges 2 um eine Schwenkachse 13, die zwischen dem Oberwerkzeug 11 und dem Unterwerkzeug 12 ausgebildet ist, erfolgen oder es wird, wenn die beiden Werkzeugteile nicht gelenkig miteinander verbunden sind, das Oberwerkzeug 1 abgesenkt bzw. das Unterwerkzeug 12 gegen das Oberwerkzeug 11 translatorisch verstellt.

Die Formgebung des Motorraumdämmelementes 6 selbst und die Verbindung der einzelnen Schichten miteinander erfolgt bei erhöhter Temperatur und unter erhöhtem Druck. Indem das Schichtgebilde gegebenenfalls zwischen dem Gesenk und dem Stempel komprimiert wird, kann eine höhere Haftfestigkeit der Schichten aneinander erreicht werden. Wenn die Schaumstoffschicht 2 mitverpresst wird, kann durch den Druck der zähplastische Kunststoff teilweise in die Poren des bevorzugt offenporigen Schaumstoffes der Schaumstoffschicht 2 eindringt und damit eine Art "Verkrallung" erreicht werden.

Unter dem Begriff "offenporig" wird verstanden, dass der Schaumstoff der Schaumstoffschicht 2 zumindest großteils, vorzugsweise zur Gänze, lediglich aus einem Zellgerüst mit Zellstegen zwischen den Poren besteht.

Für die Formgebung sind das Oberwerkzeug 11 und das Unterwerkzeug 12 auf eine die voranstehend genannte erhöhte Temperatur erhitzt. Dabei können die beiden Werkzeugteile eine zueinander unterschiedliche Temperatur aufweisen. Insbesondere kann das Unterwerkzeug 11 eine höhere Temperatur aufweisen als das Oberwerkzeug 12.

Zur Beheizung des Oberwerkzeuges 11 und des Unterwerkzeuges 12 können Heißdampf und/oder elektrische Heizungen, z.B. Widerstandsheizungen oder Strahlungsheizungen (IR-Heizungen), Heizungen mit einer Flüssigkeit, beispielsweise einem Öl, als Trägermedium, etc., verwendet werden. Der Einfachheit halber sind in Fig. 3 die Heizelemente 11, 12 als Heizwendeln dargestellt, die mit Anschlusselementen versehen sein können, die nach außen zu einem oder mehreren Regel- und/oder Steuerelementen führen können.

Es sei in diesem Zusammenhang erwähnt, dass es im Rahmen der Erfindung nicht zwingend erforderlich ist, die Werkzeugteile selbst zu erhitzen, um über diese Werkzeugteile eine Wärmeübertragung auf das Formteil 6, d.h. den in das Formwerkzeug 1 eingelegten Schichtaufbau, zu erreichen, sondern können in diesem Werkzeug, beispielsweise in entsprechenden Ausnehmungen, auch Heizelemente angeordnet sein, beispielsweise Strahlungsheizelemente, von denen direkt die Wärmeübertragung auf die Schichten des Motorraumdämmelementes 1 erfolgt.

Nachdem das umgeformte Motorraumdämmelement 1 soweit erkaltet, d.h. verfestigt ist, dass es aus der Formpresse 10 entnommen werden kann und eine weitere Verformung nicht mehr oder nur mehr marginal auftritt, wird die Formpresse 10 durch Abheben oder Verschwenken des Oberwerkzeuges 12 geöffnet und das Motorraumdämmelement 1 entnommen.

Es ist weiter möglich, dass das Oberwerkzeug 11 und/oder das Unterwerkzeug 12 mehrteilig ausgebildet sind, um eine unterschiedliche Zustellung der Formflächen zum Motorraumdämmelement 1 und damit eine unterschiedliche Kompression bzw. Verdichtung des Motorraumdämmelementes 1 zu erreichen.

Des Weiteren sei der Vollständigkeit halber erwähnt, dass das Oberwerkzeug 11 und das Unterwerkzeug 12 im Bereich des Formhohlraumes vorzugsweise eine an die Geometrie des herzustellenden Motorraumdämmelementes 1 entsprechend angepasste Oberflächengestaltung bzw. Geometrie aufweisen, sodass also die Gestalt des geschlossenen Formhohlraums die Gestalt des fertigen Motorraumdämmelementes 1 festlegen. Es können dementsprechend also zumindest in einzelnen Bereichen der Werkzeugoberflächen Vertiefungen oder Erhöhungen vorhanden sein.

In Hinblick auf die Umformung und die Verkürzung der Taktzeit kann es von Vorteil sein, wenn dass das Schichtmaterial für das Motorraumdämmelement 1 vor der Einführung in die Formpresse 10 erwärmt wird. Die Erwärmung kann beispielsweise auf eine Temperatur zwischen 50 °C und 150 °C erfolgen.

Die Formpresse 10 kann weitere Bestandteile aufweisen, wie beispielsweise ein schneidwerkzeug oder Schneidkanten oder Stanzkanten, etc.

Es besteht weiter die Möglichkeit, dass in dem Motorraumdämmelement 1 zumindest eine Ausnehmung bzw. ein Durchbruch ausgebildet wird. Dazu kann in dem Oberwerkzeug 11 und/oder Unterwerkzeug 12 zumindest ein Schneid- oder Stanzwerkzeug angeordnet sein, dass gegebenenfalls relativ zu dem jeweiligen Werkzeugteil verstellbar ist und mit dem die Ausnehmung erzeugt werden kann.

Vorzugsweise wird der gesamte Schichtverbund des Motorraumdämmelementes 1 in der Formpresse 10 in einem Schritt hergestellt, d.h. die einzelnen Schichten miteinander verbunden und das Motorraumdämmelement 1 gegebenenfalls beschnitten.

Das Motorraumdämmelement 1 wird also bevorzugt mit einem Thermoformverfahren hergestellt, wobei auch andere Herstellverfahren möglich sind.

Wie beschrieben, kann bei dem Thermoformverfahren die Schaumstoffschicht 2 mit umgeformt werden. Es ist aber nach einer Ausführungsvariante dazu auch möglich, dass die Schaumstoffschicht 2 erst nach der Formgebung der Metallschicht 3 (oder metallisierten Schicht) und der Faserschicht 4 durch Hinterschäumen des so hergestellten Halbfertigfabrikats hergestellt wird.

Gegebenenfalls kann auf der Faserschicht 4 vor der Ausbildung der Schaumstoffschicht 2 eine abdichtende oder dichte Schicht angeordnet werden, um damit den Schäumprozess bzw. das Hinterschäumen besser ausführen zu können. Diese Schicht kann beispielsweise entweder einlagig oder mehrlagig ausgeführt werden. Falls sie einlagig ausgeführt wird, werden bevorzugt unverstärkte Polyolefine als Ausgangsmaterial verwendet. Es kann aber auch ein anderer Kunststoff verwendet werden, der ermöglicht, dass die Schicht "dicht" bleibt (auch bei hohen Umformgraden). Ebenso kann ein verstärktes Polyolefin (z.B. mit Talkum oder Kreide verstärktes Polyolefin) eingesetzt werden. Falls die Schicht mehrlagig ausgeführt wird, kann der Aufbau eine erste, eine zweite und eine dritte Kunststofffolie aufweisen, wobei die erste Kunststofffolie ein Polyolefin, z.B. PE oder PP, die zweite Kunststofffolie ein Polyamid, ein Polyester oder eine Polyetherketon, und die dritte Kunststofffolie ein Polyolefin, z.B. PE oder PP sein können. Es sind aber auch z.B. dreilagige Polypropylen-Folien, welche unterschiedliche Schmelzindizes aufweisen (zumindest Kernschicht gegenüber Außenschichten), einsetzbar.

Die Schichtdicke der weiteren Schicht kann ausgewählt sein aus einem Bereich von 5 µm bis 500 µm, insbesondere aus einem Bereich von 100 µm bis 200 µm.

Weiter kann nach einer Ausführungsvariante des Verfahrens vorgesehen sein, dass nicht nur die die Poren 7 aufweisende Metallschicht 3 (oder metallisierte Schicht) eingesetzt wird, sondern dass auch das Oberwerkzeug 11 und/oder das Unterwerkzeug 12 Durchbrüche 16 (in Fig. 3 strichliert dargestellt) aufweist/aufweisen, um damit aus dem Prozess entstehendes Wasser besser abführen zu können.

Obwohl im Voranstehenden eine Ausführungsvariante beschrieben wurde, bei der zwischen der Metallschicht 3 oder metallisierten Schicht und der Faserschicht 4 die Schaumstoffschicht 2 angeordnet ist, besteht im Rahmen der Erfindung auch die Möglichkeit, auf die Schaumstoffschicht 2 zu verzichten, sodass also das Motorraumdämmelement nur die Metallschicht 3 oder metallisierte Schicht und die Faserschicht 4 umfasst bzw. daraus besteht. Ebenso besteht die Möglichkeit, auf die Metallschicht 3 oder metallisierte Schicht zu verzichten, sodass also das Motorraumdämmelement nur die Schaumstoffschicht 2 und die Faserschicht 4 umfasst bzw. daraus besteht. Das Herstellungsverfahren des Motorraumdämmelementes ist dementsprechend anzupassen.

Das Motorraumdämmelement 1 kann nicht nur im Motorraum eines Kfz an sich verwendet werden. Beispielsweise kann es auch in einem Getriebetunnel (z.B. unterhalb des Fahrgastraumes) oder an einem motorfernen Katalysator eingesetzt werden.

Die Ausführungsbeispiele zeigen bzw. beschreiben mögliche Ausführungsvarianten des Motorraumdämmelementes 1 bzw. des Verfahrens zu dessen Herstellung, wobei an dieser Stelle bemerkt sei, dass auch Kombinationen der einzelnen Ausführungsvarianten untereinander möglich sind.

Der Ordnung halber sei abschließend darauf hingewiesen, dass zum besseren Verständnis des Aufbaus des Motorraumdämmelementes 1 bzw. der Formpresse 10 diese nicht zwingenderweise maßstäblich dargestellt sind.

### Bezugszeichenaufstellung

- 1: Motorraumdämmelement
- 2: Schaumstoffschicht
- 3: Metallschicht
- 4: Faserschicht
- 5: Bindemittel
- 6: Faser
- 7: Pore
- 8: Abstand
- 9: Dekorschicht
- 10: Formpresse
- 11: Oberwerkzeug
- 12: Unterwerkzeug
- 13: Schwenkachse
- 14: Heizelement
- 15: Heizelement
- 16: Durchbruch

## Patentansprüche

1. Motorraumdämmelement (1) aus einem mehrschichtigen Verbundwerkstoff,
- umfassend zumindest eine Metallschicht (3) oder metallisierte Schicht und zumindest eine Faserschicht (4) aus Fasern (6) und einem Bindemittel (5) für die Fasern (6) sowie gegebenenfalls zumindest eine Schaumstoffschicht (2), die auf der Faserschicht angeordnet ist, oder
- umfassend zumindest eine Faserschicht (4) aus Fasern (6) und einem Bindemittel (5) für die Fasern (6) sowie zumindest eine Schaumstoffschicht (2), die auf der Faserschicht angeordnet ist,
**dadurch gekennzeichnet, dass** das Bindemittel (5) ein Wasserglas oder ein polycarbonsäurebasierter Duroplast ist.

2. Motorraumdämmelement (1) nach Anspruch 1, **dadurch gekennzeichnet, dass** das Duroplast polyacrylsäurebasierend ist.

3. Motorraumdämmelement (1) nach Anspruch 1 oder 2, **dadurch gekennzeichnet, dass** die Fasern (6) anorganische Fasern (6) und/oder organische Fasern (6) sind.

4. Motorraumdämmelement (1) nach einem der Ansprüche 1 bis 3, **dadurch gekennzeichnet, dass** die Metallschicht (3) oder metallisierte Schicht Poren (7) aufweist.

5. Motorraumdämmelement (1) nach Anspruch 4, **dadurch gekennzeichnet, dass** die Poren (7) einen maximalen Durchmesser aufweisen, der ausgewählt ist aus einem Bereich von 100 µm bis 2000 µm.

6. Motorraumdämmelement (1) nach Anspruch 4 oder 5, **dadurch gekennzeichnet, dass** die Poren (7) in einem Raster angeordnet sind.

7. Motorraumdämmelement (1) nach einem der Ansprüche 4 bis 6, **dadurch gekennzeichnet, dass** pro cm² Fläche zwischen 1 und 100 Poren (7) in der Metallschicht (3) oder metallisierten Schicht angeordnet sind.

8. Motorraumdämmelement (1) nach einem der Ansprüche 1 oder 3 bis 7, **dadurch gekennzeichnet, dass** das Wasserglas ein Kaliwasserglas ist.

9. Verfahren zur Herstellung eines Motorraumdämmelementes (1), insbesondere nach einem der Ansprüche 1 bis 8, nach dem ein mehrschichtiger Verbundwerkstoff
- umfassend zumindest eine Metallschicht (3) oder metallisierte Schicht und zumindest eine Faserschicht (4) aus Fasern (6) und einem Bindemittel (5) für die Fasern (6), sowie gegebenenfalls zumindest eine Schaumstoffschicht (2), die auf der Faserschicht angeordnet wird, hergestellt wird, oder
- umfassend zumindest eine Faserschicht (4) aus Fasern (6) und einem Bindemittel (5) für die Fasern (6), sowie zumindest eine Schaumstoffschicht (2), die auf der Faserschicht angeordnet wird,
hergestellt wird,
**dadurch gekennzeichnet, dass** als Bindemittel (5) für die Fasern (6) der Faserschicht (4) ein Wasserglas oder ein polycarbonsäurebasierter Duroplast eingesetzt wird.

10. Verfahren nach Anspruch 9, **dadurch gekennzeichnet, dass** der Verbundwerkstoff nach einem Thermoformverfahren umgeformt wird.

11. Verfahren nach Anspruch 9, **dadurch gekennzeichnet, dass** der Schaumstoff der Schaumstoffschicht (2) mit dem Thermoformverfahren mit umgeformt wird.

12. Verfahren nach Anspruch 9, **dadurch gekennzeichnet, dass** zuerst die Metallschicht (3) oder metallisierte Schicht und die Faserschicht (4) umgeformt werden und danach die Schaumstoffschicht (2) hergestellt wird.

13. Verfahren nach einem der Ansprüche 9 bis 12, **dadurch gekennzeichnet, dass** eine Poren (7) aufweisende Metallschicht (3) oder metallisierter Schicht eingesetzt wird.

14. Verfahren nach einem der Ansprüche 10 bis 13, **dadurch gekennzeichnet, dass** eine Durchbrüche (16) aufweisende Formpresse (10) für das Thermoformverfahren verwendet wird.
